(19) Europäisches Patentamt

European Patent Office

Office européen des brevets

(11) Veröffentlichungsnummer: **0 043 470 B1**

(12) **EUROPÄISCHE PATENTSCHRIFT**

(45) Veröffentlichungstag der Patentschrift:
21.11.84

(51) Int. Cl.³: **C 13 D 3/06,** C 02 F 11/10,
B 09 B 3/00, C 10 L 10/00

(21) Anmeldenummer: **81104664.8**

(22) Anmeldetag: **16.06.81**

(54) **Verfahren zur Hygienisierung von Carbonatationsschlämmen.**

(30) Priorität: 11.07.80 DE 3026383
03.07.80 DE 3025263

(43) Veröffentlichungstag der Anmeldung:
13.01.82 Patentblatt 82/2

(45) Bekanntmachung des Hinweises auf die Patenterteilung:
21.11.84 Patentblatt 84/47

(84) Benannte Vertragsstaaten:
AT BE CH DE FR GB IT LI NL SE

(56) Entgegenhaltungen:
DE - A - 2 257 539
DE - A - 2 539 695
DE - A - 2 603 077
DE - A - 2 748 510
GB - A - 1 286 595

(73) Patentinhaber: **Deutsche Kommunal-Anlagen Miete GmbH, Arnulfstrasse 44, D-8000 München 2 (DE)**

(72) Erfinder: **Hillekamp, Klaus, Dr., Musäusstrasse 3, D-8000 München 60 (DE)**

**Beschreibung**

Die Erfindung betrifft ein Verfahren zur Hygienisierung von Carbonatationsschlämmen durch thermische Behandlung.

Bei der Gewinnung von Zucker aus Zuckerrüben oder Zuckerrohr fällt in der Zuckerindustrie zunächst der sog. Rohsaft an. Dieser Rohsaft enthält Verunreinigungen, vorzugsweise organische Verbindungen, wie Saccharose und Eiweiß sowie Phosphorsäure.

Die Reinigung dieses Rohsaftes erfolgt dadurch, daß ihm Kalkmilch zugesetzt wird, welche die Verunreinigungen bindet. Nach Einleiten von Kohlensäure fallen Calciumcarbonat und Calciumphosphat zusammen mit den anderen Verunreinigungen aus, wobei feiner Schlamm entsteht, der als Carbonatationsschlamm bezeichnet wird.

Dieser Carbonatationsschlamm stellt somit ein Primärprodukt der Zuckerreinigung dar und besteht im allgemeinen aus 50% Wasser, 40% Calciumcarbonat und 10% organischen Bestandteilen. Die organischen Bestandteile setzen sich vorzugsweise aus Saccharose und Aminoglucose zusammen. Außerdem enthält der Carbonatationsschlamm im Calciumcarbonat mit eingerechnet noch Phosphat in einer Menge von 0,7 Gew.-%.

Der Carbonatationsschlamm wird mit Hilfe von Trommelfiltern zu einer pumpfähigen Masse eingedickt und schließlich in großen Schlammteichen abgelagert. In diesen sog. Aufladeteichen versickert das Wasser langsam in den Boden und verdunstet auch während der Sommermonate. Aus dieser Art der Abfallbeseitigung resultieren erhebliche Umweltprobleme:

— Während der Gärung und Ausfaulung kommt es zu starken Geruchsbelästigungen;
— das in den Untergrund versickernde Wasser kann zu einer Gefährdung des Grundwassers führen;
— infolge des hohen Sauerstoffbedarfs während der Gärung und Faulung des Schlamms benötigen die Aufladeteiche erhebliche Flächen.

Der vorliegenden Erfindung liegt die Aufgabe zugrunde, ein umweltfreundliches Verfahren zur Hygienisierung der Carbonatationsschlämme zu schaffen, das bei geringem Energieaufwand durchführbar ist. Diese Aufgabe wird erfindungsgemäß dadurch gelöst, daß die Carbonatationsschlämme mit heizwertreichen, organische Stoffe enthaltenden Abfällen gemischt und das Gemisch unter Luftausschluß bei einer Temperatur von 200°C bis 800°C, vorzugsweise 250°C bis 720°C, pyrolytisch zersetzt wird, wobei eine Calcinierung vermieden wird. Der Ausdruck »pyrolytisch zersetzen« ist mit »entgasen« bedeutungsgleich.

Durch die Erfindung wird ein Verfahren geschaffen, das die einwandfreie und rasche Hygienisierung des Carbonatationsschlamms ermöglicht, wobei das Calciumcarbonat und -phosphat im Carbonatationsschlamm gleichzeitig die anorganischen Säuren Chlorwasserstoff, Fluorwasserstoff und Schwefeldioxid neutralisieren, welche aus den säurebildenden Verbindungen der heizwertreichen Abfälle entstehen, und diese in den Rückstand der pyrolytischen Zersetzung einbinden.

Des weiteren wird die Gefahr einer Emission von Schwermetallen vermieden, da diese mit Calciumcarbonat und Calciumphosphat zu schwerflüchtigen Verbindungen umgesetzt werden, die sich bei den angewandten niedrigen Verfahrenstemperaturen auch nicht zersetzen. Die bei der Pyrolyse entstehenden Schwelgase, welche einen hohen Heizwert aufweisen, können daher gefahrlos und ohne das zusätzliche kostspielige und energieverzehrende Reinigungsverfahren notwendig werden, als Heizgas weiterverwendet werden. Durch die Ausnutzung des Heizwerts der heizwertreichen Abfälle wird somit insgesamt eine sehr günstige Energiebilanz geschaffen.

Auch wird der Rückstand gegen ein Auslaugen von Schwermetallen stabilisiert, da diese mit Calciumcarbonat und Calciumphosphat zu schwerflüchtigen Verbindungen umgesetzt werden, die sich bei den Verfahrenstemperaturen nicht zersetzen.

Es ist zwar bekannt, heizwertreiche organische Stoffe enthaltende Abfälle zu entgasen. Hierbei entstehen jedoch ebenfalls gasförmige Schadstoffe, wie Chlorwasserstoff, Fluorwasserstoff, Schwefelwasserstoff und Schwefeldioxid, sowie in den festen Rückständen lösliche Schwermetalle, die bei der Ablagerung durch Berührung mit Niederschlagswasser ausgewaschen werden und dann in das Grund- und Oberflächenwasser gelangen können. Bei der Kondensation der gasförmigen, oben aufgezählten Schadstoffe können auch korrodierende Flüssigkeiten entstehen. In die Atmosphäre emittiert sind diese Schadstoffe von Nachteil für Menschen, Tiere und Pflanzen. Ein Übergang in das Wasser, wie es bei der nassen Wäsche, z. B. der Schwelgase, erfolgt, führt ebenfalls zur Umweltbelastung. Aus diesem Grunde müssen die Anlagen zur Durchführung derartiger Entgasungsprozesse mit material- und betriebskostenmäßig teuren Gasreinigungsanlagen auf der Grundlage der Naßwäsche ausgestattet werden. Das bei der Entgasung anfallende Brenngas kann zwar nach seiner Reinigung anlagenintern zur Beheizung des Reaktors und/oder unter Gewinnung von Dampf oder auch von Strom verbrannt werden, es bietet sich jedoch nicht immer die Verwendung des Brenngases oder auch des erzeugten Dampfes in Form einer wirtschaftlichen Nutzung an, so daß insgesamt die Entgasung von Abfällen mit erheblichen Nachteilen belastet ist, die einer universellen Anwendbarkeit dieses Verfahrens entgegensteht.

Des weiteren ist es aus der schweizerischen Patentschrift 484 262 bekannt, Müll gegebenenfalls mit Schlamm zu vergasen. Da bei der Vergasung, welche eine Teilverbrennung ist, Reaktionstemperaturen von mindestens 800°C, im Durchschnitt von 900°C bis 1000°C auftreten, ist eine Anwendung dieses Verfahrens zur Hygienisierung der Carbonatationsschlämme denkbar ungeeignet, da bei den angeführten hohen Reaktionstemperaturen Reaktionen eintreten, die unerwünscht und ebenfalls mit erheblichem Energieaufwand verbunden sind.

Zu diesen unerwünschten Reaktionen zählt die Zersetzung des Calciumcarbonats bei Temperaturen oberhalb 800°C in Kohlendioxid und Calciumoxid. Dieser Vorgang, technisch als Brennen des Kalkes bekannt, erfordert eine erhebliche Energiezufuhr und liefert im vorliegenden Verfahren ein mit Kohlendioxid angereichertes minderwertiges Brenngas, das kaum weiterzuverwerten ist. Es entsteht gleichzeitig ein mit den anorganischen Rückständen verunreinigter Branntkalk, der wertlos ist. Da heizwertreiche Abfälle, wie Hausmüll, Rinde, Lackschlämme, Altreifen, Gummi, Kunststoffe, Säureharze, Altöl, organische Shredderabfälle und dergleichen, auch die Elemente Chlor, Fluor und Schwefel enthalten sowie gegebenenfalls Spuren oder größere Mengen von Schwermetallen, käme es bei den erwähnten hohen Reaktionstemperaturen der Vergasung zur Zersetzung der gebildeten Chloride, Fluoride und Sulfate, so daß es zu einem hohen Ausstoß an entsprechenden gasförmigen Schadstoffen der angeführten Elemente käme. Außerdem würde die Emission der Schwermetalle Zink, Blei, Cadmium und Quecksilber zunehmen, und es würden die hochgiftigen Dioxine gebildet. Das Vergasen der Carbonatationsschlämme mit heizwertreichem Müll würde daher zu erheblichen, nicht hinnehmbaren Umweltbelastungen führen oder anlagenmäßig aufwendige Reinigungsmaßnahmen notwendig machen, zu deren Durchführung zusätzlich ein hoher Energiebedarf notwendig wäre.

Gemäß der GB-A-1 286 595 soll bei der Pyrolyse von Abfallprodukten Kalk — gemeint wohl Kalkstein — zugefügt werden, damit man beim Erhitzen basisch reagierende Calciumverbindungen erhält, welche die freigesetzten sauren Gase binden sollen. Hierzu mußte eine Verfahrensführung angewandt werden, bei welcher der Kalkstein ebenfalls zersetzt, d. h. calciniert wird, um alkalisch reagierende Calciumverbindungen zu erzeugen, was nach den vorstehenden Ausführungen unerwünscht ist.

Das erfindungsgemäße Verfahren ist daher auch aus dem vorstehend genannten Stand der Technik nicht nahegelegt.

Das erfindungsgemäße Verfahren kann in außenbeheizten Reaktoren, wie Drehrohröfen, Kammeröfen, Retorten und Schachtöfen durchgeführt werden.

Das Entgasen der Mischung aus Carbonatationschlämmen und Abfällen kann sowohl bei Unterdruck im Reaktor als auch bei Überdruck erfolgen.

Als heizwertreiche Abfälle sind alle Abfallstoffe geeignet, deren Pyrolyse unter Energiegewinn verläuft, z. B. Hausmüll, hausmüllähnliche Gewerbeabfälle, Abfallholz der verschiedensten Ausführung, organische Shredderabfälle, Lackschlämme, Altöl, Säureharze, Kunststoffe, Altreifen, Bleicherden aus der Erst- und Zweitraffination und dergleichen, sowie Gemische derselben.

Die angeführten Abfallstoffe können fest, pastös oder flüssig eingesetzt werden.

Bei Verwendung von flüssigen Abfallstoffen ist es je nach Reaktorart notwendig, diese mit festen Abfallstoffen zu vermischen, um ein rasches Durchlaufen der Flüssigkeit durch den Heißteil des Reaktors zu vermeiden.

Grobstückiges oder zu voluminöses Material, wie z. B. Holzabfälle, müssen vorher zerkleinert werden. Das gleiche betrifft auch Altreifen, deren Größe dem Reaktoreingang angepaßt werden muß.

Der Heizwert Hu der angeführten Abfälle kann im weiten Bereich von $4,187 \cdot 10^6$ J/kg (1000 kcal/kg) bis $33,49 \cdot 10^6$ J/kg (8000 kcal/kg) schwanken. Von folgenden durchschnittlichen Heizwerten ausgewählter Abfallstoffe kann ausgegangen werden:

| | | |
|---|---|---|
| Hausmüll | $7,536 \cdot 10^6$ J/kg | (1800 kcal/kg) |
| PVC | $18,84 \cdot 10^6$ J/kg | (4500 kcal/kg) |
| Polyäthylen | $33,49 \cdot 10^6$ J/kg | (8000 kcal/kg) |
| organische Shredderabfälle | $18,84 \cdot 10^6$ bis $25,12 \cdot 10^6$ J/kg | (4500—6000 kcal/kg) |
| Altöl | $33,49 \cdot 10^6$ bis $37,68 \cdot 10^6$ J/kg | (8000—9000 kcal/kg) |
| Säureharze | $16,75 \cdot 10^6$ J/kg | (4000 kcal/kg) |
| Bleicherden | $14,24 \cdot 10^6$ bis $20,93 \cdot 10^6$ J/kg | (3400—5000 kcal/kg) |
| Altreifen | $29,31 \cdot 10^6$ bis $35,59 \cdot 10^6$ J/kg | (7000—8500 kcal/kg) |

Bei der Pyrolyse dieser Abfallstoffe entstehen Schwelgase in zum Teil beträchtlicher Menge, die einen erheblichen Heizwert aufweisen, der von $8,37 \cdot 10^6$ bis $41,87 \cdot 10^6$ J/Nm³ (2000 bis 10 000 kcal/Nm³) schwanken kann.

Die Abfälle enthalten noch Elemente, die bei einem Entgasen normalerweise freigesetzt werden und dann teilweise in die Gasphase mit übergehen. Es handelt sich dabei um Chlor, das als Chlorwasserstoff auftritt. Chlor ist im Hausmüll z. B. in einer Konzentration von 0,4 Gew.-%, im PVC in einer Menge von 57 Gew.-% vorhanden.

Ein weiteres störendes Element ist Schwefel. Sein Anteil beträgt im Hausmüll 0,2 bis 0,75 Gew.-%, in Altreifen 1 bis 2 Gew.-% und in Säureharzen 12 bis 17 Gew.-%.

Eine weitere Komponente der Abfälle, die zur Bildung störender Schadstoffe Anlaß gibt, ist Fluor. Dessen Anteil beträgt im Hausmüll 0,08 Gew.-% und im Teflon immerhin 76 Gew.-%.

Hinzu kommt noch, daß die Abfälle Schwermetalle enthalten. Kunststoffe enthalten z. B. Cadmium und Blei in unterschiedlicher Menge. Bei den Säureharzen ist mit einem Zink- und Bleianteil von 600 bis 1100 ppm bzw. 700 bis 8200 ppm zu rechnen. Altöle enthalten immerhin Blei in einer Menge von 0,1 bis 0,3 Gew.-%.

Für die praktische Durchführung des erfindungsgemäßen Verfahrens hat es sich als besonders günstig erwiesen, wenn bei Einsatz von Säureharzen die Vermischung derselben mit Carbonations- schlamm außerhalb des thermischen Reaktors erfolgt und erst bei Beendigung der CO₂-Freisetzung die pyrolytische Zersetzung vorgenommen wird. Der Grund hierfür liegt darin, daß sich bei der Vermischung von Säureharzen mit dem Carbonationsschlamm erhebliche Mengen Kohlendioxid entwickeln, die bei der Vornahme der Vermischung im thermischen Reaktor zu einer erheblichen Verdünnung des entstehenden und weiterverwendbaren Brenngases mit dem nichtbrennbaren Kohlendioxid führen.

Zweckmäßigerweise wird für die Durchführung des Verfahrens thixotroper Carbonationsschlamm verwendet, da dieser in der Zuckerindustrie nach der Behandlung in den Trommelfiltern direkt anfällt. Er enthält in dieser Form etwa 50% Wasser, 40 Gew.-% Calciumcarbonat und 10 Gew.-% organisches Material.

In leistungsfähigen Kammerfilterpressen kann dieser Schlamm weitgehend entwässert werden.

Es ist möglich, den Wassergehalt bis auf 20% zu senken. Dann beträgt der Calciumcarbonatgehalt 64 Gew.-% und der organische Anteil 16 Gew.-%.

Er kann zur Durchführung des Verfahrens im flüssigen, pumpfähigen Zustand in den Reaktionsraum eingebracht werden.

Das Calciumcarbonat enthält noch geringe Mengen an Phosphaten. Insgesamt beträgt der Anteil an Phosphaten, Sand und Sulfaten, bezogen auf den Feststoffanteil des Carbonationsschlamms, 4 Gew.-%, derjenige der Phosphate 0,7 Gew.-%.

Der organische Anteil des Carbonationsschlamms, der, bezogen auf die Feststubstanz, etwa 20 Gew.-% beträgt, setzt sich im wesentlichen aus Saccharose und Aminoglucose zusammen. Der Anteil der Saccharose am organischen Teil beträgt etwa 20 Gew.-%, der der Aminoglukose rd. 80 Gew.-%.

Der Heizwert Hu des organischen Anteils des Carbonationsschlamms liegt bei 14,654 · 10⁶ J/kg (3500 kcal/kg). Der Heizwert Hu eines Carbonationsschlamms mit 50% Wassergehalt liegt bei nur 0,251 · 10⁶ bis 0,419 · 10⁶ J/kg (60 bis 100 kcal/kg). Der Heizwert eines auf 20% Wassergehalt entwäs- serten Carbonationsschlamms beträgt rd. 1,675 · 10⁶ bis 1,884 · 10⁶ J/kg (400 bis 450 kcal/kg).

Durch die Art der Gewinnung des Carbonationsschlamms aus Kalkmilch und Rohsaft der Zuckerindustrie unter Einleitung von Kohlensäure und Ausfällung der organischen Substanzen sowie auch des durch Neutralisation der Phosphorsäure entstandenen Calciumphosphates entsteht ein Produkt, in dem alle Bestandteile in großer Feinheit und in idealer Durchmischung beisammen sind. Die anorganischen Bestandteile Calciumcarbonat und Calciumphosphat liegen aufgrund ihrer extrem feinen Verteilung in einer sehr reaktionsfreudigen Form vor. Dies bedeutet, daß sie für die aufgeführten Anwendungszwecke und Aufgaben bei der Behandlung der heizwertreichen Abfälle in besonderem Maße und bevorzugt mit den störenden Elementen und Schwermetallen zu reagieren vermögen. Verstärkt wird diese ideale Kombination aus dem Schwermetallfällungs- und -bindemittel Phosphat noch dadurch, daß bei der thermischen Behandlung der organische Anteil zersetzt wird. Da diese Zersetzung unter Gasentwicklung vor sich geht, wird während der thermischen Behandlung der Abfälle mit Carbonationsschlamm ständig neue Oberfläche geschaffen, was sich für die Reaktionen im angeführten Sinne besonders günstig auswirkt.

Der Carbonationsschlamm kann mit den heizwertreichen Abfällen im weiten Bereich gemischt werden. Die Abfälle können mit dem Carbonationsschlamm entweder im Reaktor oder bereits vor dem Reaktor gemischt werden.

Neben dem Carbonationsschlamm können mit Vorteil noch weitere Additive zur Einbindung säurebildender Substanzen, wie z. B. basische Stoffe oder potentiell säurebindende Stoffe, zugesetzt werden.

Besonders eignen sich hierfür säurebindende Alkaliverbindungen, die mit den bei der Zersetzung der organischen Stoffe freiwerdenden säurebildenden Substanzen unter Bildung von hydrolysebeständigen und thermisch beständigen Salzen reagieren, oder potentiell säurebindende Alkaliverbindungen, die sich bei erhöhter Temperatur zu basisch reagierenden Metalloxiden zersetzen, welche mit den bei der Zersetzung der organischen Stoffe entstehenden säurebildenden Substanzen unter Bildung von Salzen reagieren. Als säurebindende Alkaliverbindungen kommen besonders im Temperaturbereich von 200° C bis 800° C, insbesondere von 250° C bis 720° C, schmelzende Salze in Betracht, wie Alkaliformiate, z. B. Natriumformiat, Alkaliacetate, Alkalinitrite, z. B. Natriumnitrit, Alkalinitrate, Natriumhydroxid und/oder Natriumbicarbonat. Als potentiell säurebindende Substanzen kommen insbesondere oxidierend wirkende Alkalisalze organischer Säuren, Alkalialkoholate, Alkalialkyle und/oder organische Komplexverbindungen von Alkaliverbindungen in Betracht. Geeignet ist auch Natriumcarbonat.

Die säurebindenden Alkaliverbindungen können auch als eutektische Gemische verwendet werden. Günstigerweise werden die säurebindenden Alkaliverbindungen als Lösungen, vorzugsweise als wäß-

4

rige Lösungen, oder als Pulver den organischen Stoffen zugegeben bzw. in den Reaktionsraum eingebracht.

Die säurebindenden Alkaliverbindungen werden zweckmäßigerweise in 0,25— bis 10fach, vorzugsweise 0,5 bis 5fach, stöchiometrischer Menge, bezogen auf die einzubindende Säure oder Säuren, zugesetzt. Zur Rückstandsverdichtung können zusätzlich säurebindende Calciumverbindungen zugegeben werden.

Die bei der pyrolytischen Zersetzung der organischen Bestandteile sich bildenden sauren Stoffe, wie Chlorwasserstoff, Fluorwasserstoff, Schwefelwasserstoff und Schwefeldioxid setzen sich mit dem fein verteilten Calciumcarbonat des Carbonatationsschlamms um und verbleiben als Calciumsalze im Rückstand der Entgasung. Die in den Abfällen vorhandenen Schwermetalle, die bereits, wie das Cadmium, bei Temperaturen von 300°C bis 600°C meßbar emittiert werden, werden bei den hohen Reaktionstemperaturen von 300°C bis 600°C als Carbonate, vorzugsweise jedoch als Phosphate, durch entsprechende Umsetzungen mit den Calciumphosphaten eingebunden. Die Schwermetallphosphate haben eine derart niedrige Löslichkeit, daß sie bei Berührung mit Niederschlagswasser nicht ausgewaschen werden. Hinzu kommt noch, daß Schwermetallphosphate im Gegensatz zu den Schwermetallcarbonaten kaum säurelöslich sind. Eine Lösung durch Kohlensäure findet nicht statt. Eine zeitweilige, kurzzeitige oder länger anhaltende Änderung des pH-Werts im Rückstand kann nicht mehr zu Lösungserscheinungen führen.

Die Einbindung der Schwermetalle Blei, Zink, Kupfer, Quecksilber, Nickel, Kobalt, Cadmium und Zink als schwerlösliche Phosphate ist ein besonderer Vorteil des Verfahrens. Ein weiterer Vorteil der Anwesenheit von Phosphaten im Reaktionsraum besteht darin, daß die Bildung und Emission lungengängiger, toxischer Schwermetallaerosole weitgehend vermieden wird.

Um in der vorstehend beschriebenen Weise den Carbonatationsschlamm besonders wirksam zur »in situ«-Reinigung des entstehenden Brenngases von sauren Schadstoffen und zur Einbindung derselben zu verwenden, und um den Rückstand wirksam gegen Schwermetallauslaugung zu stabilisieren, wird man je nach Art der Schadstoffe ein geeignetes stöchiometrisches Verhältnis wählen und die zuzusetzende Menge an Carbonatationsschlamm entsprechend bestimmen.

So kann man beispielsweise mit Vorteil dem Carbonatationsschlamm chlorhaltige, heizwertreiche Abfälle, bezogen auf den Chlorgehalt, in solcher Menge zusetzen, daß das stöchiometrische Verhältnis von Chlor — berechnet als Chlorwasserstoff — zu Calciumcarbonat 0,25 bis 20 beträgt.

Gemäß einer bevorzugten Weiterbildung des Verfahrens kann man ferner Carbonatationsschlamm in einer solchen Menge mit Abfällen vermischen, daß das stöchiometrische Verhältnis der Gesamtmenge an Chlor, berechnet als Chlorwasserstoff, Fluor, berechnet als Fluorwasserstoff, und Schwefel, berechnet als Schwefelsäure, zum Carbonatationsschlamm 0,25 bis 20 beträgt.

Zwecks Einbindung von Schwermetallen in den Rückstand ist es besonders günstig, wenn den heizwertreichen Abfällen soviel Carbonatationsschlamm zugesetzt wird, daß das stöchiometrische Verhältnis der einzubindenden Schwermetalle zum Calciumphosphat des Carbonatationsschlamms 0,2 bis 5, vorzugsweise 0,25 bis 3, beträgt.

Das bei der pyrolytischen Zersetzung gebildete Schwelgas kann als Brenngas beliebigen Verbrauchern zugeführt werden. Gemäß einer besonders bevorzugten Ausgestaltung des erfindungsgemäßen Verfahrens wird es zur Beheizung des thermischen Reaktors, in welchem die Pyrolyse durchgeführt wird, ganz oder anteilig verwendet. Wenn durch Einhaltung entsprechender stöchiometrischer Verhältnisse die Brenngase ausreichend gereinigt anfallen, ist eine nachträgliche Reinigung derselben in der Regel nicht notwendig.

Soll der volle Heizwert der heizwertreichen Abfälle zur Entwässerung und Hygienisierung des Carbonatationsschlamms ausgenützt werden, so werden in vorteilhafter Weise Carbonatationsschlamm und Abfall in einer solchen Menge vermischt, daß die Pyrolyse unter Ausnützung des Heizwerts der heizwertreichen Abfälle autotherm (autark) verläuft. Unter autotherm wird hierbei verstanden, daß während der Pyrolyse soviel Heizgas erzeugt wird, daß die Entwässerung und die vollständige Zersetzung der organischen Bestandteile der eingebrachten Abfälle und des Carbonatationsschlamms gewährleistet ist. Im allgemeinen kann davon ausgegangen werden, daß die untere Grenze der Selbstgängigkeit einer Pyrolyse bei etwa einem Hu von $4,187 \cdot 10^6$ bis $5,024 \cdot 10^6$ J/kg (1000 bis 1200 kcal/kg) liegt. Dementsprechend ist es von Vorteil, den heizwertreichen Abfällen soviel Carbonatationsschlamm zuzugeben, daß dieser untere Heizwert nicht unterschritten wird. Wenn dagegen mit Abfallmischungen aus Abfällen und Carbonatationsschlamm gearbeitet wird, deren Heiz-wert unterhalb $4,187 \cdot 10^6$ J/kg (1000 kcal/kg) liegt, muß mit Fremdenergie gearbeitet werden.

Es ist unter Umständen zweckmäßig, den Carbonatationsschlamm durch Ausnützung der aus der Anlage abzuführenden Abwärme oder durch anteiliges Verbrennen von Brenngas vorzutrocknen.

Die folgenden Beispiele dienen der weiteren Erläuterung der Erfindung:

Beispiel 1

260 g Carbonatationsschlamm, der bei der Reinigung von Zuckerrüben-Rohsaft angefallen ist und dessen Wassergehalt 26,8% und dessen organischer Anteil rd. 12% betrug, wurden in einem elektrisch beheizten Ofen, dessen Temperaturgradient 10"/min betrug, unter Luftausschluß thermisch behandelt. Hierbei zeigte es sich anhand von Gewichtsverlustkurven, daß das Wasser im Temperaturbereich von 90°C bis 200°C vollständig abgetrieben werden konnte. Die Zersetzung des organischen Materials setzte knapp oberhalb 200° C ein und war bei 550°C beendet. Es hinterblieb ein schwarzgrauer Rückstand, der völlig geruchlos war und keine vergärbare organische Substanz mehr enthielt.

Eine weitere Erhitzung unter Luftausschluß zeigte, daß die Zersetzung des Calciumcarbonats bei etwa 800°C einsetzt und unter den angegebenen Versuchsbedingungen bei 910°C beendet war.

## Beispiel 2

Aus 48 g Cellulose und 1,76 g Polyvinylchlorid wurde ein Gemisch hergestellt, dessen Chlorgehalt 2 Gew.-% betrug. Diesem Gemisch wurden 1,57 g handelsübliches Kalksteinmehl, dessen Gehalt an Calciumcarbonat 90% betrug, zugesetzt. Das stöchiometrische Verhältnis der aus dem PVC stammenden theoretischen Menge Chlor-Wasserstoff zu Calciumcarbonat des Kalksteinmehls betrug 1.

Dieses Gemisch wurde unter Luftausschluß innerhalb 45 Minuten gleichmäßig von 20°C auf 650°C erhitzt. Es hinterblieb ein schwarzer Rückstand, der 32% des mit dem PVC eingeführten Chlors enthielt.

## Beispiel 3

38,1 g Cellulose und 1,73 g PVC (Chlorgehalt 57%) wurden vermischt. Hierzu kamen noch 2,38 g Carbonatationsschlamm. Der Wassergehalt des eingesetzten Carbonatationsschlamms betrug 26 Gew.-%, der Anteil an Calciumcarbonat 59 Gew.-%.

Das stöchiometrische Verhältnis der aus dem PVC stammenden theoretisch möglichen Chlorwasserstoffmenge zur Calciumcarbonatmenge des Carbonatationsschlamms betrug 1.

Nach gründlicher Durchmischung aller Komponenten wurde dieses Gemisch im Verlauf von 45 Minuten gleichmäßig von 20°C auf 650°C unter Luftausschluß erhitzt. Es hinterblieb ein schwarzer Rückstand, in dem 38% des mit dem PVC eingebrachten Chlors enthalten waren.

Ein Vergleich der Versuche 2 und 3 zeigt, daß mit Carbonatationsschlamm eine wirksamere Einbindung von Chlor in den Rückstand erzielt werden kann als mit Kalksteinmehl.

## Beispiel 4

48,2 g Cellulose und 1,76 g PVC (Chlorgehalt 57%) wurden vermischt. Zu diesem Gemisch wurden noch 7,18 g Carbonatationsschlamm zugegeben. Der Carbonatationsschlamm hatte hier einen Wassergehalt von 26 Gew.-% und wies einen wirksamen Calciumcarbonatgehalt von 59% auf. Das stöchiometrische Verhältnis der aus dem PVC stammenden theoretisch möglichen Chlorwasserstoffmenge zum Calciumcarbonat des Carbonatationsschlamms betrug 3.

Nach einer gründlichen Durchmischung aller Komponenten wurde das Gemisch innerhalb von 45 Minuten gleichmäßig von 20°C bis 650°C erhitzt. Hierbei entstand ein schwarzer Rückstand, der 45% des mit dem PVC eingebrachten Chlors enthielt.

## Patentansprüche

1. Verfahren zur Hygienisierung von Carbonatationsschlämmen durch thermische Behandlung, insbesondere solcher, die bei der Reinigung von Rohsaft aus der Zuckergewinnung anfallen, dadurch gekennzeichnet, daß die Carbonatationsschlämme mit heizwertreichen, organische Stoffe enthaltenden Abfällen gemischt und das Gemisch unter Luftausschluß bei einer Temperatur von 200°C bis 800°C, vorzugsweise 250°C bis 720°C, pyrolytisch zersetzt wird, wobei eine Calcinierung vermieden wird.

2. Verfahren nach Anspruch 1, dadurch gekennzeichnet, daß bei Einsatz von Säureharzen die Vermischung derselben mit Carbonatationsschlamm außerhalb des thermischen Reaktors erfolgt und erst bei Beendigung der $CO_2$-Freisetzung die pyrolytische Zersetzung vorgenommen wird.

3. Verfahren nach Anspruch 1 oder 2, dadurch gekennzeichnet, daß thixotroper Carbonatationsschlamm verwendet wird.

4. Verfahren nach einem der Ansprüche 1 bis 3, dadurch gekennzeichnet, daß dem Carbonatationsschlamm heizwertreiche Abfälle, bezogen auf den Chlorgehalt, in solcher Menge zugesetzt werden, daß das stöchiometrische Verhältnis von Chlor (berechnet als Chlorwasserstoff) zu Calciumcarbonat 0,25 bis 20 beträgt.

5. Verfahren nach einem der Ansprüche 1 bis 4, dadurch gekennzeichnet, daß dem Carbonatationsschlamm heizwertreiche Abfälle, bezogen auf den Gesamtgehalt an Chlor, berechnet als Chlorwasserstoff, Fluor, berechnet als Fluorwasserstoff, und Schwefel, berechnet als Schwefelsäure, in solcher Menge zugesetzt wird, daß das stöchiometrische Verhältnis des Gesamtgehalts an Chlor, Fluor und Schwefel nach vorstehender Berechnung zu Calciumcarbonat 0,25 bis 20 beträgt.

6. Verfahren nach einem der Ansprüche 1 bis 5, dadurch gekennzeichnet, daß neben dem Carbonationsschlamm noch weitere Additive zur Einbindung säurebildender Substanzen, wie basische Stoffe oder potentiell säurebindende Stoffe, zugesetzt werden.

7. Verfahren nach einem der Ansprüche 1 bis 6, dadurch gekennzeichnet, daß zur Einbindung von Schwermetallen in den Rückstand soviel Carbonationsschlamm zugesetzt wird, daß das stöchiometrische Verhältnis der einzubindenden Schwermetalle zum Calciumphosphat des Carbonationsschlammes 0,2 bis 5, vorzugsweise 0,25 bis 3, beträgt.

8. Verfahren nach einem der Ansprüche 1 bis 7, dadurch gekennzeichnet, daß die bei der pyrolytischen Zersetzung anfallenden Brenngase zur Beheizung des thermischen Reaktors, in welchem die Pyrolyse durchgeführt wird, ganz oder anteilig verwendet werden.

9. Verfahren nach Anspruch 8, dadurch gekennzeichnet, daß die bei der pyrolytischen Zersetzung anfallenden Brenngase zur Außenbeheizung des thermischen Reaktors verwendet werden.

10. Verfahren nach Anspruch 9, dadurch gekennzeichnet, daß die Brenngase ungereinigt verwendet werden.

11. Verfahren nach einem der Ansprüche 1 bis 10, dadurch gekennzeichnet, daß den heizwertreichen Abfällen Carbonationsschlamm in solcher Menge zugesetzt wird, daß der Heizwert (Hu) des Abfallgemisches mehr als $4,187 \cdot 10^6$ J/kg (1000 kcal/kg) beträgt und einen autothermen (autarken) Betrieb ermöglicht.

12. Verfahren nach einem der Ansprüche 1 bis 11, dadurch gekennzeichnet, daß der Carbonationsschlamm durch Ausnützung der aus dem Prozeß abzuführenden Abwärme oder durch anteiliges Verbrennen von Brenngas vorgetrocknet wird.

## Claims

1. Method for hygienizing carbonatation mud by thermal treatment, especially carbonatation mud which occurs when cleaning the crude juice from the sugar extraction characterized in that the carbonatation mud is mixed with waste containing substances which are organic and rich in calorific value and that the mixture, to the exclusion of air, is pyrolytically decomposed at a temperature of 200° C to 800° C, preferably 250° C to 720° C, thus avoiding a ca cination.

2. Method according to claim 1, characterized in that when using acid resins the mixture of these acid resins with carbonatation mud takes place outside the thermal reactor and that only after the $CO_2$-liberation the pyrolytical decomposition occurs.

3. Method according to claim 1 or 2, characterized in that thixotropic carbonatation mud is used.

4. Method according to any preceding claim, characterized in that the waste rich in calorific, value, in relation to the chlorine content, are added to the carbonatation mud in such a quantity that the stoichiometrical proportion of chlorine (equivalent to hydrogen chloride) to calcium carbonate amounts to 0,25 to 20.

5. Method according to any preceding claim, characterized in that waste rich in calorific value, in relation to the total content of chlorine, equivalent to hydrogen chloride, fluorine, equivalent to hydrogen fluoride, and sulphur, equivalent to sulphuric acid, are added to the carbonatation mud in such a quantity that the stoichiometrical proportion of the total content of chlorine, fluorine and sulphur to the calcium carbonate amounts to 0,25 to 20 according to the above calculation.

6. Method according to any preceding claim, characterized in that besides the carbonatation mud further additives are added to bind acid forming materials, such as basic substances or potentially acid binding substances.

7. Method according to any preceding claim, characterized in that for the binding of heavy metals in the residue so much carbonatation mud is added that the stoichiometrical proportion of the heavy metals to be bind to the calcium phosphate of the carbonatation mud amounts to 0,2 to 5, preferably 0,25 to 3.

8. Method according to any preceding claim, characterized in that the combustible gases produced by the pyrolytical decomposition are used totally or proportionally for the heating of the thermal reactor in which the pyrolysis is carried out.

9. Method according to claim 8, characterized in that the combustible gases produced by the pyrolytical decomposition are used for the outside heating of the thermal reactor.

10. Method according to claim 9, characterized in that the combustible gases are used unpurified.

11. Method according to any preceding claim characterized in that carbonatation mud is added to the waste rich in calorific value in such a quantity that the calorific value (net calorific value) of the waste mixture amounts to more than $4,187 \cdot 10^6$ J/kg (1000 kcal/k) and makes an autothermal (self-sufficient) working possible.

12. Method according to any preceding claim characterized in that the carbonatation mud is predried by utilizing the waste heat eliminated from the process or by proportional combustion of combustible gas.

**Revendications**

1. Procédé pour rendre hygiéniques les écumes de carbonatation par traitement thermique, en particulier celles occasionnées par l'épuration de jus brut en provenance de l'extraction du sucre, caractérisé en ce que les écumes de carbonatation sont mélangées avec des déchets contenant des éléments organiques et ayant une grande valeur calorifique, et que ce mélange est décomposé pyrolytiquement, à l'exclusion d'air, à une température de 200°C à 800°C, de préférence de 250°C à 720°C, tout en évitant qu'une calcination se produise.

2. Procédé selon revendication 1 caractérisé en ce que, lors de l'utilisation des goudrons du dépôt de fond ceux-ci sont mélangés avec de l'écume de carbonatation en dehors du réacteur thermique et que la décomposition pyrolytique est effectuée seulement après que le dégagement du $CO_2$ est terminé.

3. Procédé selon revendication 1 ou 2 caractérisé en ce que de l'écume de carbonatation thixotrope est utilisée.

4. Procédé selon une des revendications 1 à 3 caractérisé en ce que des déchets ayant une grande valeur calorifique, en rapport à la teneur en chlore, sont ajoutés à l'écume de carbonatation dans une telle quantité que la relation stœchiométrique entre le chlore (calculé comme gaz hydrochlorique) et le carbonate de chaux fait 0,25 à 20.

5. Procédé selon une des revendications 1 à 4 caractérisé en ce que des déchets ayant une grande valeur calorifique, en rapport à la teneur totale en chlore, calculé comme gaz hydrochlorique, de fluor, calculé comme fluorure d'hydrogène, et du soufre, calculé comme acide sulfhydrique, sont ajoutés à l'écume de carbonatation dans une telle quantité que la relation stœchiométrique de la teneur totale en chlore, fluor et soufre selon la calculation précédente, et le carbonate de chaux fait 0,25 à 20.

6. Procédé selon une des revendications 1 à 5 caractérisé en ce que, outre l'écume de carbonatation, sont ajoutés encore d'autres additifs pour lier des matières acidifiantes, comme des éléments basiques ou des éléments liant potentiellement les acides.

7. Procédé selon une des revendications 1 à 6 caractérisé en ce que, pour lier des métaux lourds dans le résidu, il est ajouté tant d'écume de carbonatation qu'il faut pour obtenir une relation stœchiométrique entre les métaux lourds à lier et le phosphate de calcium de l'écume de carbonatation se situant entre 0,2 et 5, préférentiellement entre 0,25 à 3.

8. Procédé selon une des revendications 1 à 7 caractérisé en ce que les gaz combustibles provenant de la décomposition pyrolytique sont entièrement ou partiellement utilisés pour chauffer le réacteur thermique dans lequel la pyrolyse s'effectue.

9. Procédé selon revendication 8 caractérisé en ce que les gaz combustibles provenant de la décomposition thermique sont utilisés pour chauffer le réacteur thermique de l'extérieur.

10. Procédé selon revendication 9 caractérisé en ce que les gaz combustibles sont utilisés en état non purifié.

11. Procédé selon une des revendications 1 à 10 caractérisé en ce que de l'écume de carbonatation est ajoutée aux déchets ayant une grande valeur calorifique dans une telle quantité que la valeur calorifique nette du mélange de déchets fait plus que $4,187 \cdot 10^6$ J/kg (1000 kcal/kg) et rend possible un fonctionnement autothermique (indépendant).

12. Procédé selon une des revendications 1 à 11 caractérisé en ce que l'écume de carbonatation est préséchée en exploitant la chaleur perdue à dissiper du procédé, ou bien en brûlant proportionnellement du gaz combustible.